# EUROPEAN PATENT APPLICATION

(11) **EP 1 219 198 A2**
(43) Date of publication of application: **03.07.2002**
(21) Application number: 01310670.3
(22) Date of filing: 20.12.2001
(51) Int. Cl.: A44C 5/00

(54) **Wrist mounting type electronic apparatus**

(30) Priority: 27.12.2000 JP 2000393981; 03.12.2001 JP 2001369128
(71) Applicant: Seiko Instruments Inc., Chiba-shi, Chiba (JP)
(72) Inventor: Terasawa, Dai, Mihama-ku, Chiba-shi, Chiba (JP); Iguchi, Katsunobu, Mihama-ku, Chiba-shi, Chiba (JP); Matsumoto, Nobuhide, Mihama-ku, Chiba-shi, Chiba (JP); Bito, Yoshinori, Mihama-ku, Chiba-shi, Chiba (JP)
(74) Representative: Sturt, Clifford Mark

(57) **Abstract**

When a slide piece is fitted to a slide groove, the slide piece can be slid. When a latch is caught by recesses, a position of the slide piece in the slide groove is stabilized. Since the slide groove is provided with a plurality of the recesses at constant intervals, among the recesses, the recess at a most suitable position is selected and the latch is caught by the recess. The slide piece is integral with the inserting portion of a strap and therefore, the position of the slide piece is determined so as to adjust a length of the strap around the wrist. Further, the latch is only urged by a spring and the recess is not so deep as to engage the latch and therefore, when the slide piece is pushed or pulled by exerting force, the position of the slide piece can also be changed.

## Description

The present invention relates to a wrist mounting type electronic apparatus having a mounting member for mounting an electronic apparatus on the wrist.

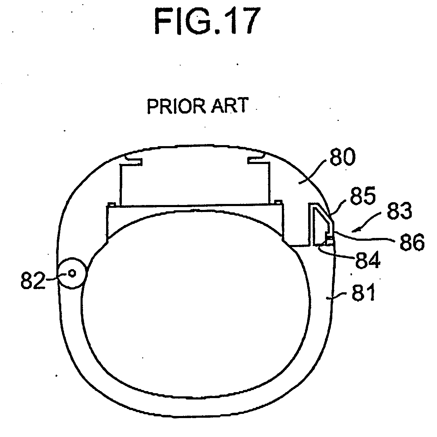

Fig. 17 is a constitution view showing a mounting member of a conventional wrist mounting type electronic apparatus. According to a wrist mounting type electronic apparatus, timepiece, computer, communication apparatus or the like is constituted by an electronic circuit to thereby downsize the wrist mounting type electronic apparatus so as to be mounted on the wrist. Such a wrist mounting type electronic apparatus is constituted by a main body 80 for executing a function provided thereby and a strap 81 as a mounting member for mounting the electronic apparatus on the wrist.

The strap 81 shown in the drawing is pivoted centering on a hinge 82 formed to a coupling portion coupled with the main body 80 to thereby enable to mount and dismount the strap 81 on and from the wrist. An end portion of the strap 81 on a side opposed to the hinge 82, is formed with an engaging portion 83 for maintaining a state of being mounted onto the wrist. The engaging portion 83 is of a type of inserting a sheet metal member 85 substantially in a shape of check mark the width of which can be changed by elastic deformation, into an insertion slot 84 having a narrow opening.

The sheet metal member 85 substantially in the shape of the check mark, is formed by a shape in which a front end thereof is bent to fold in an acute angle and when the sheet metal member 85 is pressed to the insertion slot 84, the sheet metal member 85 is elastically deformed to contract to the width of the opening in accordance with the walls of the opening of the insertion slot 84. The sheet metal member 85 substantially in the shape of the check mark, is reduced in the width by the elastic deformation and passes through the insertion slot 14. After passing therethrough, the sheet metal member 85 elastically recovers to the original width in a space inside of the insertion slot 84 and is prevented from being drawn therefrom. The space is provided with an attachment and detachment window 86 communicating with outside and when the sheet metal member 85 substantially in the shape of the check mark is pressed from outside of the attachment and detachment window 86 to constitute a same width as the width of the opening, the strap 81 is drawn from the insertion slot 84 to recover a state before attachment.

However, the mounting member of the conventional wrist mounting type electronic apparatus cannot correspond to a wrist size of a user for mounting the mounting member but is uniformly engaged therewith. Different from an ornamental article, it is preferable that the mounting member of the wrist mounting type electronic apparatus corresponds to the wrist size as much as possible.

Hence, the invention has been carried out in view of the above-described and it is an object thereof to provide a wrist mounting type electronic apparatus capable of adjusting a length or an angle of a strap in correspondence with a wrist size of a user.

According to the invention, there is provided a wrist mounting type electronic apparatus comprising a slender slide piece, and a mounting member for guiding the slide piece so that the slide piece can be moved in a longitudinal direction, wherein either one of the slide piece and the mounting member includes a groove for locking the slide piece relative to the mounting member, and wherein the other of the slide piece and the mounting member includes a locking portion engaged with the groove for determining a position of the slide piece. Further, here, "slender" with regard to the slide piece refers to the state that a length thereof is larger (longer) than a width or a thickness thereof and "longitudinal direction" with regard to the slide piece indicates a direction along the length and is also referred to as an axial direction.

According to the wrist mounting type electronic apparatus, the slide piece can be slid relative to the mounting member to a position desired by a user and the mounting member can be adapted to the wrist.

Next, according to the invention, there is provided the wrist mounting type electronic apparatus, wherein a plurality of the grooves are formed in either one of the slide piece and the mounting member, and wherein the locking portion is formed at the other thereof different from the either one.

Next, according to the invention, there is provided the wrist mounting type electronic apparatus, wherein the locking portion is formed in the slide piece, and wherein the slide piece includes an elastically deformed elastic portion and the elastic portion includes the locking portion.

Next, according to the invention, there is provided the wrist mounting type electronic apparatus, wherein the locking portion includes an engaging member for engaging with the groove and an elastic member for pressing the engaging member in a depth direction of the groove.

Next, according to the invention, there is provided a wrist mounting type electronic apparatus comprising a hinge comprising a first hinge piece and a second hinge piece for opening and closing a mounting member, wherein the first hinge piece includes a first hole and the second hinge piece includes a second hole, further comprising a latch pin one side of which is inserted into the first hole and the other side of which is inserted into the second hole.

Next, according to the invention, there is provided the wrist mounting type electronic apparatus, wherein the first hole is engaged with the latch pin and an inner diameter of the second hole is larger than an outer diameter of the latch pin.

Next, according to the invention, there is provided the wrist mounting type electronic apparatus, wherein the second hole comprises a plurality of holes the inner diameters of which differ one another.

Next, according to the invention, there is provided the wrist mounting type electronic apparatus, wherein the second hole is provided with a plurality of different inner diameters.

Next, according to the invention, there is provided a wrist mounting type electronic apparatus comprising a latch catching portion for determining an angle of opening and closing a hinge, and a fixed member for interchangeably fixing the latch catching portion.

Next, according to the invention, there is provided the wrist mounting type electronic apparatus, further comprising a latch engaged with the latch catching portion and rotated in accordance with rotation of the hinge.

Further, there may be constructed a constitution including a slide piece having a flat shape, a latch as a locking portion fitted to a space constituted by grooves inscribed at left and right sides of the slide piece and a clearance of a cabinet for inserting the slide piece, having an obtuse head and jumping out in an external direction from the slide piece by a spring, and a slide groove for guiding the slide piece and formed with a plurality of recesses as grooves for locking by which the obtuse head of the latch is caught. The slide piece can be slid by being guided by the slide groove. According to the latch jumping out in the external direction from the slide piece by the spring, the obtuse head is caught by the recess of the slide groove. Thereby, the position of the slide piece is stabilized. Since a plurality of the recesses are provided at the slide groove, among the recesses, the recess at the most suitable position is selected and the latch is caught by the recess. According to the strap having the slide piece and the like, a length thereof can substantially be adjusted.

Further, in the wrist mounting type electronic apparatus, the latch may be constituted by a cylinder in which a spherical body urged (that is, deviated) by the spring disposed at an inner portion is partially exposed. The cylinder is fitted to the groove of the slide piece. At the inner portion of the cylinder, about a half of the spherical body urged (deviated) by the spring in the direction of jumping out in the external direction from the slide piece, is enclosed. A remaining portion of the spherical body is exposed from the cylinder and is caught by the recess of the slide groove as a front end of the latch. When the front end of the latch is drawn from the recess or when the slide piece is slid, the spherical body is subjected to rolling friction and therefore, friction is reduced.

Further, there may be constructed a constitution including a strap coupled to a hinge urged (deviated) in an opening direction by a spring, a plurality of holes A provided at a surface of one hinge piece constituting the hinge, aligned in a direction of a pivoting shaft of the hinge and perforated in a diameter direction, a plurality of holes B.provided at a hinge piece opposed to the holes A and having lengths of openings in a direction of pivoting the hinge which differ in steps and a latch pin urged to an opening side by a spring at inside of any one of the holes A. The hinge is constituted by constituting a pivotal movement pair by the two hinge pieces. When the latch pin urged (deviated) to the opening side of the hole A is fitted to the hole B, the hinge is fixed. The holes B are perforated with different lengths of openings in the direction of pivoting the hinge and accordingly, the position of fixing the hinge differs depending on the hole B to be selected. The selection is determined by the position of the hole A (that is, the specific hole A of the plurality of holes A aligned in the pivotal axis direction) where the latch pin is provided. Further, the hinge is urged (deviated) in the opening direction by the spring and therefore, the latch pin is pressed to one side of an inner wall of the hole B and fixed. Thereby, an angle of the strap coupled to the hinge is changed. (Here, "A" and "B" are identifying symbols used for discriminating two kinds of the holes from each other. Although in this paragraph as well as two paragraphs successive thereto, symbols A, B, C, D, E, F are used as identification symbols, use of the identification symbols in these paragraphs does not show that symbols per se are described in the drawing. These symbols are attached with an object of enabling to easily discriminate elements attached with these symbols fromother elements in contexts of sentences.)

There may be constructed a mounting member of a wrist mounting type electronic apparatus in which a hinge for coupling a main body of the wrist mounting type electronic apparatus and a strap, is constituted by a pair of hinge pieces, one hinge piece of the pair of hinge pieces is constituted by a mode of a projected portion and the other hinge piece is constituted by a mode of a recessed portion, further, at inside of the projected portion, there is provided a straight line groove A at one end face, there is perforated with an opening inner hole C in a direction of a pivoting axis at the other end face, there are provided a latch provided at inside of the inner hole C to be urged by a spring in a direction of jumping out in the axial direction from a side face of the inner hole C, having a two-face width E fitted to the straight line groove A at one end portion of the cylindrical shaft and inscribed with a straight line groove B at an end portion thereof on an opposed side, and a latch catching portion constituted to be integrated with a key and engaged with an inner face of an inner hole D of the recessed portion of the hinge piece in the mode of the recessed portion in the hinge and having a two-face width F fitted to the straight line groove B. According to the mounting member of the wrist mounting type electronic apparatus, there are provided a plurality of the latch catching portions respectively having different angles of the two-face width F relative to the direction of projecting the key and any one of the plurality of latch catching portions is selected and used. According to the mounting member of the wrist mounting type electronic apparatus, as mentioned above, the latch is provided at the inner hole C of the projected portion constituting the hinge and at an end portion of the latch constituting a cylindrical shaft, the two-face width E is provided which is fitted to the straight line groove A at inside of the inner hole C. Thereby, pivotal movement of the latch at inside of the inner hole C is bound and is pivoted along with the projected portion. Further, the latch is urged by the spring and accordingly, when the straight line groove B of the pivoting latch and the two-face width F of the latch catching portion coincide with each other, the latch is jumped out in the axial direction from the side face of the inner hole and is fitted to the latch catching portion. Further, pivotal movement at inside of the inner hole D of the latch catching portion is bound by a combination with the inner hole D formed at the recessed portion of the hinge piece in the mode of the recessed portion in the key and the hinge and is pivoted along with the recessed portion. Therefore, fitting of the latch and the latch catching portion fixes the hinge.

Meanwhile, the strap of the wrist mounting type electronic apparatus can serve by pivotal movement at least equal to or smaller than 120 degrees. In a pivotal movement range of the strap or the hinge, the straight line groove B inscribed at the end portion of the latch is formed by a shape constituting the same direction by only a single angle with the recessed side of the hinge as a reference. (The same direction is constituted only after rotating by 180 degrees.) Therefore, when any one of a plurality of the latch catching portions provided with the two face width portion F in directions respectively having different angles relative to the direction of projecting the key, is selected and fitted to the inner hole of the recessed portion, the angle of the hinge at the time of latch fitting to the latch catching portion can be changed. Thereby, the angle of mounting the strap coupled to the hinge to the wrist can be changed and adjusted.

Further, according to the invention, in order to achieve the above-described object, there is provided a wrist mounting type electronic apparatus comprising a first and a second hinge pieces relatively pivotable around a pivotal center axis line, further comprising a projected portion pivotable around the pivotal center axis line substantially integrally with the first hinge piece and projected in a direction intersecting with a direction of extending the pivotal center axis line from the first hinge piece to the second hinge piece, and a pivotal position prescribing member having a recessed portion for receiving a projected end portion of the projected portion to restrict pivotal movement of the first hinge piece in one direction relative to the second hinge piece around the pivotal center axis line for restricting pivotal movement of the projected portion in the one direction by a side wall of the recessed portion and detachably mounted to the second hinge piece, wherein the pivotal position prescribing member is constituted by selectively mounting one of a plurality of kinds thereof having different positions of the side walls so that a position of restricting relative pivotal movement of the first hinge piece relative to the second hinge piece can be changed.

According to such a wrist mounting type electronic apparatus, one of a plurality of kinds thereof having different positions of the side walls of the recessed portions for receiving the projected portion is selectively mounted so that the position of restricting relative pivotal movement of the first hinge piece relative to the second hinge piece can be changed and therefore, by mounting the pivotal position prescribing member after replacing the same member to a pertinent one in conformity with the size of the wrist among the group of total position prescribing member comprising a plurality of kinds, the position of restricting relative pivotal movement between the first and the second hinge pieces can be changed. Further, even when the projected portion or the recessed portion for receiving the projected portion is downsized in accordance with downsizing of the wrist mounting type electronic apparatus, the pivotal position prescribing member having the recessed portion for receiving the projected portion can be provided with a comparatively large size and therefore, replacing thereof can easily be executed. That is, according to the wrist mounting type electronic timepiece, a small part for changing the pivotal position is not replaced or the small part per se is not replaced but the pivotal position prescribing member constituting a comparatively large composite part capable of changing the pivotal position and integrated with the small part constitution can be replaced, so that the replacement can easily be executed and therefore, the wrist mounting type electronic apparatus can easily be changed to adapt to the size of the wrist of the user.

Further, according to the pivotal position prescribing member, the projected end portion of the projected portion projected in the direction of intersecting with the direction of extending the pivotal center axis line may be received by the recessed portion for receiving to thereby restrict pivotal movement of the projected portion by the one side wall and therefore, the pivotal position prescribing member can be attached and detached along a direction of intersecting with the pivotal centar axis line, so that the pivotal position prescribing member can be constituted to attach and detach at a location opened to an open space and therefore, attachment and detachment thereof can be executed further easily. Here, the projected portion can be pivoted substantially integrally with the first hinge piece. However, with regard to the projected portion, "substantially integral pivotal movement" refers to the movement that the projected portion is integral therewith to a degree of capable of engaging with the side wall by being fitted to inside of the recessed portion for receiving the projected portion in accordance with the pivotal movement of the first hinge piece and in the pivotal movement, the projected portion may not be strictly integral with the first hinge piece. The direction of intersecting with the pivotal center axis line is typically orthogonal direction, however, depending on cases, may be a skewed direction. Further, typically, the second hinge piece and the pivotal position prescribing member are constituted so as to move relative to the second hinge piece in the direction substantially orthogonal to the direction of extending the pivotal center axis line when the pivotal position prescribing member is attached to and detached from the second hinge piece. As a result, attachment and detachment thereof is facilitated.

Therefore, according to the invention, typically, there is provided the wrist mounting type electronic apparatus wherein the recessed portion for receiving the front end of the projected portion of the pivotal position prescribing member is opened at a position opposed to the pivotal center axis line and is extended in a direction substantially orthogonal to a direction of extending the pivotal axis line from the opening.

Further, according to the invention, there is provided the wrist mounting type electronic apparatus, wherein the first hinge piece includes a projected support portion engaged with the projected portion so that a front end portion of the projected portion can be projected and retracted and a spring for deviating the projected portion in a direction of projecting thereof and the pivotal position prescribing member includes a pushing pin capable of pushing out the projected portion from the recessed portion for receiving the front end of the projected portion. Thereby, detachment of the pivotal position prescribing member is facilitated by releasing lock in accordance with releasing contact of the projected portion to the side wall of the pivotal position prescribing member or releasing the degree stop. Therefore, the replacement is facilitated and the size of the mounting body of the wrist mounting type electronic apparatus can easily be changed.

Further, according to the invention, there is provided the wrist mounting type electronic apparatus, wherein the second hinge piece includes a guide face for guiding pivotal movement of the front end of the projected portion to permit pivotal movement of the first hinge piece relative to the second hinge piece when the front end portion of the projected portion is retracted to be detached from the recessed portion for receiving the front end of the projected portion of the pivotal position prescribing member. Accordingly, replacing the pivotal position prescribing member, the projected portion can stably be supported by the guide piece and therefore, the pivotal position. prescribing member can easily be detached and reintegrated by remounting.

According to the invention, typically, there is provided the wrist mounting type electronic apparatus, wherein opening angles of the first and the second hinge pieces can be increased until the front end portion of the projected portion of the pivotal position prescribing member is brought into contaot with the side wall. However, when the wrist mounting type electronic apparatus is intended to loosely fit as in a wrist ring, the maximum angle in the reverse direction may be restricted. Further, typically, the spring load is applied in a direction of increasing the opening angle of the first and the second hinge pieces . Therefore, the first and the second hinge pieces are maintained at the maximum angle by a spring.

One hinge piece of the first and second hinge pieces may be attached to the strap or integrally formed therewith to thereby integrate with the strap and the other hinge piece may be attached to a barrel of the electronic apparatus or a cabinet thereof or integrally formed therewith to thereby integrated with the barrel or the cabinet. However, when desired, either one of the hinge pieces may be coupled to the strap or the barrel or the cabinet of the electronic apparatus via the other similar hinge piece or the like.

The wrist mounting type electronic apparatus of the invention explained as described above, is classified into a constitution for adjusting the length per se of the strap (Embodiment 1, mentioned later) and a constitution adjusting the relative pivotal position (relative pivotal angle) at the hinge between the rigid strap and the electronic apparatus main body (Embodiments 2 through 4, mentioned later). Both is not alternative but can be used together. Summarizing with regard to the latter, according to the invention, there is provided a wrist mounting type electronic apparatus comprising a first and a second hinge pieces relatively pivotable around a pivotal center axis line, further comprising elastically deviating means arranged between the first and the second hinge pieces to pivot the second hinge piece in one direction around the pivotal center axis line relative to the first hinge piece and relative pivotal position prescribing means for adjustably prescribing a position of relative pivotal movement of the second hinge piece in the one direction relative to the first hinge piece. Here, one of the first and the second hinge pieces is attached to the rigid strap or integrally formed with the strap and the other is attached to the rigid strap or integrally formed with the strap at the apparatus main body.

Embodiments of the present invention will now be described by way of further example only and with reference to the accompanying drawings, in which:-
Fig. 1 is a cross-sectional view showing a mounting member of a wrist mounting type electronic apparatus according to Embodiment 1;
Fig. 2A is a side view and Fig. 2B is a front view showing a slide piece extended to an inserting portion;
Fig. 3 is an enlarged view when a latch is used and Fig. 3 is a similar explanatory sectional view of members integrated with a cylinder, a spherical member and a spring used in place of a latch and a spring at two portions, all of which constitute enlarged views showing a vicinity of a groove of the slide piece;
Fig. 4 is a front sectional view showing an inner portion of a strap inserted with the slide piece;
Fig. 5 is an explanatory view showing a state in which the slide piece is fitted to slide grooves;
Fig. 6A is a transverse outlook view in the case of S size (small wrist size) and Fig. 6B is a transverse outlook view in the case of L size (thick wrist size) constituting transverse outlook views of the wrist mounting type electronic apparatus showing a change in a position of the slide piece;
Figs. 7 illustrate a cross-sectional view and a front view showing a mounting member and a hinge piece of a wrist mounting type electronic apparatus according to Embodiment 2 in which Fig. 7A is a cross-sectional view showing a total of the electronic apparatus and Fig .7B is a front view showing the hinge piece;
Fig. 8 is an enlarged view showing a hole perforated to a hinge piece on a main body side;
Figs. 9 illustrate cross-sectional views showing that a length of an opening of the hole effects on a degree of opening a strap in which Fig. 9A is a cross-sectional view showing a case of the hole having a short opening and Fig. 9B is a cross-sectional view showing a case of the hole having a long opening;
Figs. 10 illustrate enlarged sectional views showing a degree of opening a hinge in which Fig. 10A is an enlarged sectional view showing the hinge portion on one side and Fig. 10B is a sectional view showing a total of the wrist mounting type electronic apparatus;
Fig. 11 is a disassembled view showing a hinge portion in a mounting member of a wrist mounting type electronic apparatus according to Embodiment 3;
Fig. 12 is a plane sectional view showing an inner portion of a hinge;
Fig. 13 is a transverse outlook view showing a degree of opening a strap;
Fig. 14 is an enlarged sectional explanatory view showing a hinge and its surrounding portion of a wrist mounting type electronic apparatus according to Embodiment 4;
Figs. 15 are for explaining a portion of the hinge of Fig. 14 in which Fig. 15A is a sectional explanatory view taken along a line XVA-XVA and Fig. 15B is an explanatory view of a portion of an upper face viewed in a direction of an arrow mark XVB;
Figs. 16 show examples of wrist mounting type electronic apparatus for persons having different size of wrist in place of the wrist mounting type electronic apparatus having a pivotal position prescribing member of Fig. 14 in which Fig. 16A is a sectional explanatory view similar to Fig. 14 with regard to the wrist mounting type electronic apparatus for a person-having a thicker wrist and Fig. 16B is a sectional explanatory view similar to Fig. 14 with regard to the wrist mounting type electronic apparatus for a person having a slender wrist; and
Fig. 17 is a constitution view showing a mounting member of a conventional wrist mounting type electronic apparatus.

A detailed explanation will be given of a number of preferable embodiments of the invention in reference to the drawings as follows. Further, the invention is not limited by the embodiments.

### (Embodiment 1)

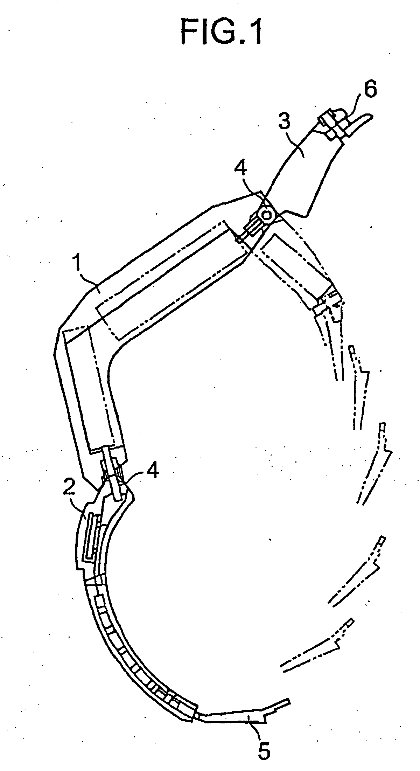

Fig. 1 is a cross-sectional view showing a mounting member of a wrist mounting type electronic apparatus according to the embodiment. As shown by the drawing, the wrist mounting type electronic apparatus is constituted by a main body 1 bent substantially in an L-like shape and straps 2 and 3. Although in the drawing, two pieces of the straps 2 and 3 are coupled to both sides of the main body 1 by hinges 4, the mounting member may be of a type of a single piece or a type constituted by coupling a number of pieces thereof. An inserting portion 5 is provided at a front end of the strap 2 on one side and by inserting the inserting portion 5 into an inserted portion 6 of the pivotable strap 3 on the other side the two straps 2 and 3 are engaged. Thereby, the wrist mounting type electronic apparatus can be mounted onto the wrist. According to the strap 2 of the type shown in the drawing, a flat piece forming the inserting portion 5 is extended into the strap 2.

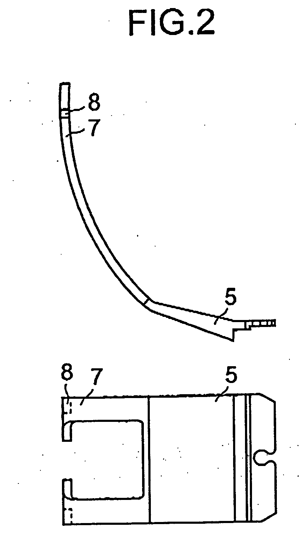

Figs. 2A and 2B are a side view and a front view showing a slide piece extended into the inserting portion. The slide piece 7 is inserted into a gap provided in a cabinet of the strap 2 and therefore, the slide piece'7 is bent in conformity with the shape of the strap 2. Grooves 8 are inscribed on the left and right sides of the slide piece 7. A central portion of the slide piece 7 is much opened. This is for catching the slide piece 7 by a projection (a portion designated by notation 16, as mentioned later) provided in the cabinet of the strap 2 so that the slide piece 7 is not detached and dropped from inside of the cabinet of the strap 2.

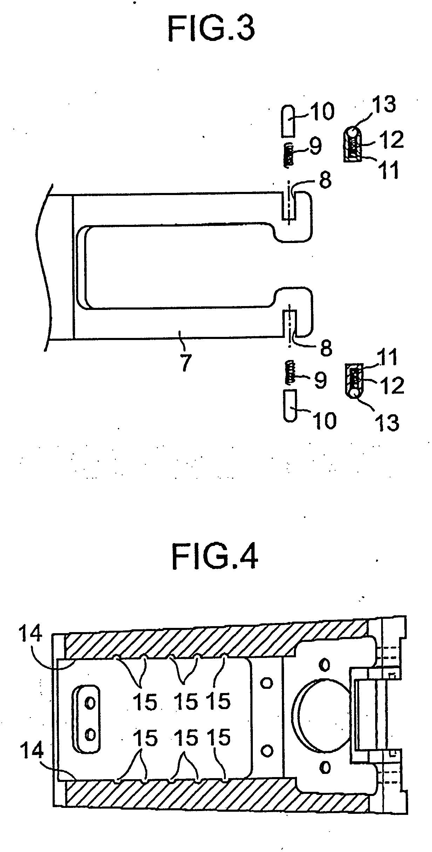

Fig. 3 is a sectional view showing to enlarge a vicinity of the groove of the slide piece. The groove 8 is provided with a latch 10 having an obtuse head so that the latch 10 jumps out in an external direction from the slide piece 7 by a spring 9. The obtuse head portion is constituted by a shape in a dome-like shape or a semispherical shape providing a projected face bent smoothly outwardly in the illustrated example. Further, in place of the latch 10, or in place of the latch. 10 and the spring 9, as shown by Fig. 3, a spherical body 13 urged, that is, deviated outwardly by a spring 12 may be contained at inside of a cylinder 11 and a portion of the spherical body 13 may be exposed. When the spherical body 13 is used, the spherical body 13 and an object in contact therewith are subjected to rolling friction and therefore, there is achieved an effect that friction is reduced more than in a constitution in which the latch 10 and an object in contact therewith are simply subjected to sliding friction by the obtuse head. The latch is held by a gap between the groove 8 and the cabinet.

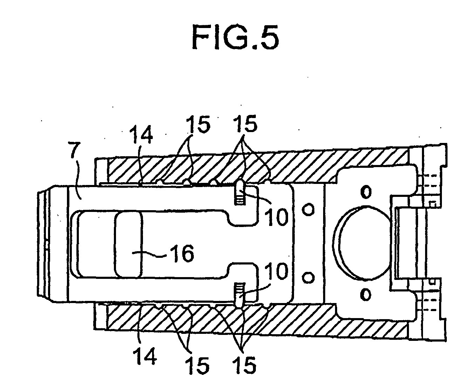

Fig. 4 is a front sectional view showing inside of the strap 2 inserted with the slide piece 7. At inside of the strap 2, there are provided recesses 15 as grooves for locking at slide grooves 14 for guiding the slide piece 7. The slide piece 7 is fitted to the slide grooves 14. Fig. 5 is an explanatory sectional view showing a state of fitting the slide piece 7 into the slide grooves 14. As shown by the drawing, when the slide piece 7 is fitted to the slide grooves 14, the slide piece 7 can be slid in a longitudinal direction. However, when the latch 10 is caught by the recesses 15, a position of the slide piece 7 at the slide grooves 14 is stabilized. Further, it is preferable to constitute the gap between the slide piece 7 and the slide groove 14 by a pertinent dimension in view of a relationship with a projection 16 disposed at a central portion of the slide piece 7.

The slide groove 14 is provided with a plurality of the recesses 15 at constant intervals and therefore, among the recesses, the recess 15 at the most suitable portion is selected and the latch 10 is caught by the recess 15. The slide piece 7 is integral with the inserting portion 5 of the strap and therefore, by determining the position of the slide piece 7, there is adjusted a length around the wrist of the strap 2. Here, the length of the strap 2 refers to an effective length (substantial length) of the strap 2, the slide piece 7 and the inserting portion 5. Further, the latch 10 is only urged by the spring, the recess 15 is not so deep as to completely engage the latch 10 (as prohibiting the latch 10 from being drawn from the recesses 15) and therefore, when the slide piece 7 is pushed or pulled by exerting force, the position of the slide piece 7 can be changed.

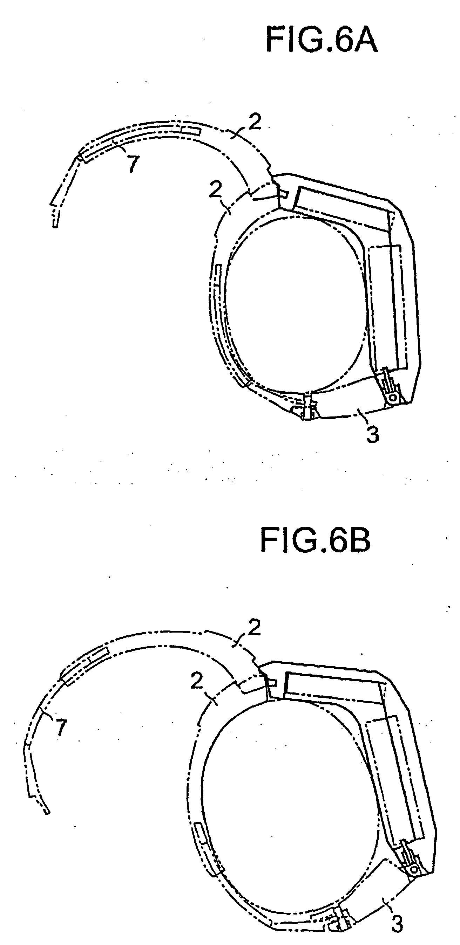

Figs. 6A and 6B are transverse outlook views of the wrist mounting type electronic apparatus showing a change in the position of the slide piece. Further, both of a state of opening the strap 2 and a state of closing the strap 2 by being engaged with the strap 3 on the other side, are shown by two-dotted chain lines. As shown by Figs. 6A and 6B, by changing the position of the slide piece 7, both of a person having a thick wrist (Fig. 6B) and a person having a slender wrist (Fig. 6A), can be dealt with by the single strap. Further, the side piece 7 is not to be necessarily extended to the inserting portion but when the strap is provided with the slide piece, the slide groove and the latch, the substantial length of the strap can be changed and adjusted.

In this way, according to the mounting member of the wrist mounting type electronic apparatus of Embodiment 1, the slide piece can be maintained at the most suitable position in conformity with the size of the wrist and the position can be changed easily. Further, in a state in which the mounting member of the wrist mounting type electronic apparatus is mounted on one wrist, when the mounting member is grasped by the other hand, the slide piece is pressed and the latches fitted to the grooves of the slide piece are caught by the recesses at the most suitable position. Thereby, the mounting member easily deals with the size of the wrist. Further, when the latch uses a spherical body, in changing the position of the slide piece, friction of the slide piece is reduced by rolling friction and the position can be changed easily.

Further, there may be constructed a constitution in which an elastic portion is provided at a portion of the slide piece, the elastic portion is normally engaged with the grooves and the elastic portion is disengaged from the grooves by exerting force to some degree to thereby slide the slide piece. This corresponds to forming the latch 10 by an elastic body in, for example, Fig. 3. In this case, the spring 9 may be dispensed with and the latch 10 comprising the elastic body may be fixedly attached to the slide piece 7 to be integral with the slide piece 7.

### (Embodiment 2)

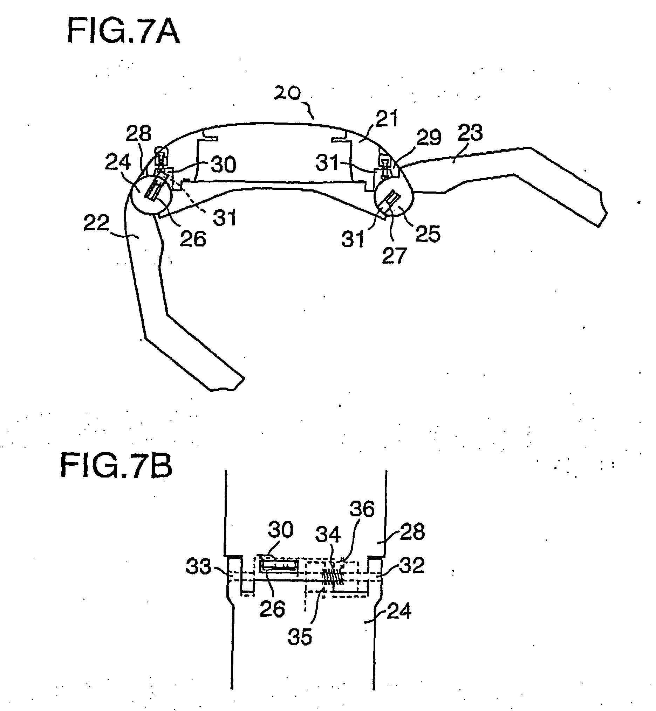

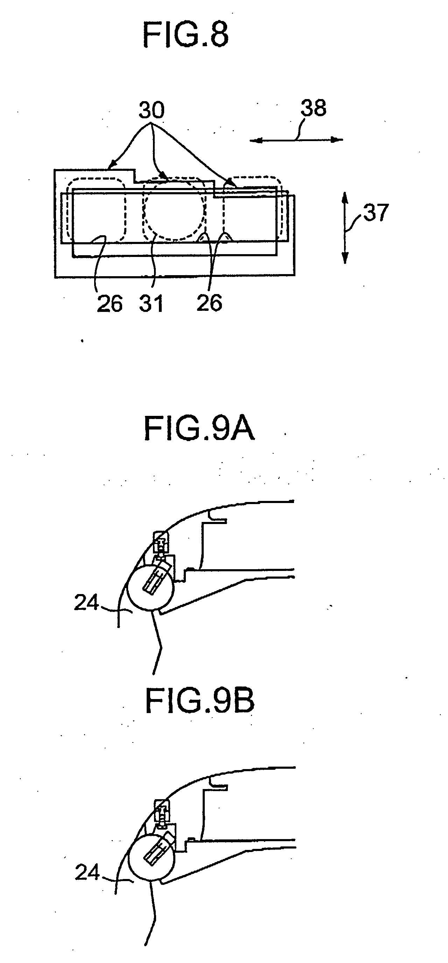

Figs. 7A and 7B are a cross-sectional view and a front view showing a mounting member and a hinge piece of a wrist mounting type electronic apparatus according to Embodiment 2. More in details, Fig. 7A is a cross-sectional view showing a total of the electronic apparatus and Fig. 7B is a front view showing the hinge piece. A wrist mounting type electronic apparatus 20 shown in Fig. 7A is constituted by a main body 21 and two pieces of straps 22 and 23. In the drawing, the strap 22 on the left side of the paper face (face representing the drawing) indicates a closed state and the strap 23 on the right side indicates an opened state. The main body 21 and the straps 22 and 23 are coupled by hinges. More in details, a hinge for coupling the main body 21 and the strap 22 includes a hinge piece 24 on the side of the strap 22 and a hinge piece 28 on the side of the main body 21 and a hinge for coupling the main body 21 and the strap 23 includes a hinge piece 25 on the side of the strap 23 and a hinge piece 29 on the side of the main body 21. At surfaces of the hinge pieces 24 and 25 on the sides of the straps 22 and 23, there are perforated pluralities of holes 26 and 27 in diameter directions (in radius directions of pivotal axis lines as centers) aligned in directions of pivoting shafts of the hinges (that is, directions of extending the pivoting shafts) 38 (also refer to Fig. 8).

At the hinge pieces 28 and 29 opposed to the holes 26 and 27, there are provided to align a plurality of holes 30 in which opening lengths in directions 37 of pivoting the hinges differ in steps in the pivoting shaft direction 38 (also refer to Fig. 8). Mechanisms of the left and right hinges are the same and therefore, an explanation will be given here of the hinge on the left side for convenience. The hole 26 of the hinge piece on one side, is contained with a latch pin 31 urged by a spring 31a. By pivoting the strap 22 that is, by pivoting the hinge piece 24, the hole 26 formed at the hinge piece 24 is also pivoted. Further, when the hole 26 is opposed to the hole 30 of the opposed hinge piece 28, the latch pin 31 is fitted to the opposed hole 30. Thereby, the hinge piece 26 and the strap 22 integral therewith are fixed.

As shown by Fig. 7B, the hinge pieces 24 and 28 are coupled in a pivotal movement pair by a spring bar 32 and a fitting pin 33. A coil spring 34 is penetrated with the spring bar 32 and projected oprtions 35 and 36 at both ends thereof are respectively brought into contact with the hinge pieces 24 and 28. Thereby, the hinge pieces 24 and 28 are urged always in a direction of opening the straps. Fig. 8 is an enlarged view showing the holes perforated to the hinge piece on the main body side. As mentioned above, the plurality of holes 30 are provided to align contiguously in the direction 38 of the pivoting shaft such that the lengths of the openings in the direction 37 of pivoting the hinge differ in steps. Further, the respective holes may not necessarily be contiguous to each other as illustrated.

In the drawing, the hole 30 is indicated by bold lines and the latch pin 31 and the hole 26 inserted therewith are indicated by dotted lines. In this way, by selecting any one of the holes 26, the latch pin 31 is inserted into the selected hole 26. Since the hinge pieces 24 and 28 are urged in the opening direction, the latch pin 31 is brought into contact with a one-side wall 39 of the hole 30. Thereby, the degree of opening the strap is determined.

Fig. 9 illustrates cross-sectional views showing that the length of the opening of the hole is influenced by the degree of opening the strap. Fig. 9A is a cross-sectional view showing a state in which the latch pin 31 is brought into contact with the one-side wall 39 of a hole having a short opening and Fig. 9B is a cross-sectional view showing a state in which the latch pin 31 is brought into contact with the one-side wall 39 of a hole having a long opening. As is known by comparing the both drawings, pivotal movement of the hinge piece'24 from a horizontal direction (angle of inclination of the hinge piece 24 relative to the horizontal direction) is smaller in a case inwhich the hole having the long length of the opening is selected and the latch pin 31 is fitted thereto. Thereby, the strap is applicable to a person having a thick wrist. On the contrary, in the case of a person having a slender wrist, the hole having the short length of the opening may be selected and the latch pin 31 may be fitted thereto. Further, the hole containing the latch pin via the spring can easily be selected by disengaging the hinge.

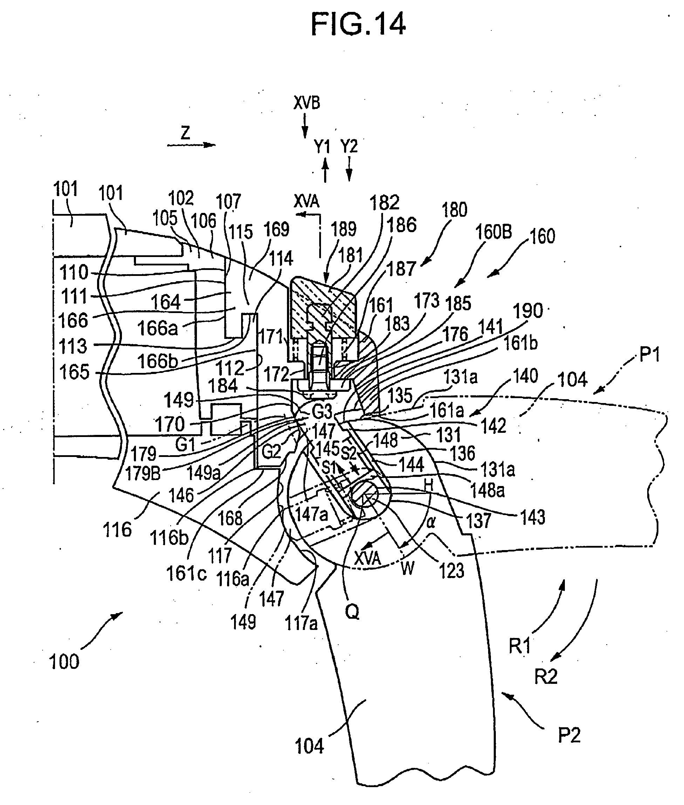

In order to release engagement of the latch pin 31 with the specific wall portion 39, for example, a push button 31c of a push button mechanism 31b is'pushed. The latch pin 31 and the push button mechanism 31b are provided with structures substantially similar to an adjust pin structural body 140 and a push button mechanism 180, mentioned later in reference to Fig. 14, and when the push button 31c of the push buttonmechanism 31b is pushed down, a push plate 31d pushes down the head portion of the latch pin 31 to thereby release the engagement. Further, in Fig. 8, in addition to the hole 30 having the side wall 39 in the step-like shape, there is shown an outline positional relationship between the push plate 31d and a head portion of the push button 31c. (ref.31).

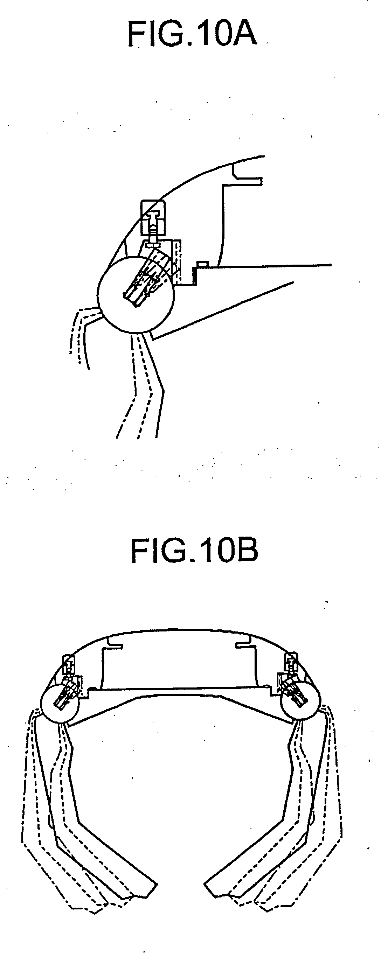

Figs. 10A and 10B are enlarged sectional views showing the degree of opening the hinge. Fig. 10A is an enlarged sectional view showing one side hinge piece and Fig. 10B is a sectional view showing a total of the wrist mounting type electronic apparatus. When the length of the opening of the hole is constituted by three stages, as shown by Fig. 10A, there are provided three stages of strap angles. As shown by Fig. 10B, when three stages of the strap angles on one side can be selected, by combining the both sides, nine stages of the strap angles can be adjusted. When a number of the holes is increased, the adjustment can be carried out at more angles. Further, although according to Embodiment 2, the length of the opening of the hole is changed in steps, similar effect is also achieved by changing the position of the hole inserted with the latch pin, that is, by, for example, making positions of the plurality of holes 26 in the pivoting direction 37 differ from each other.

In this way, according to the mounting member of the wrist mounting type electronic apparatus of Embodiment 2, by selecting to provide the latch pin to any of the plurality of holes, the position of fixing the strap can be changed. Thereby, the strap can be maintained at the most suitable position in conformity with the size of the wrist.

### (Embodiment 3)

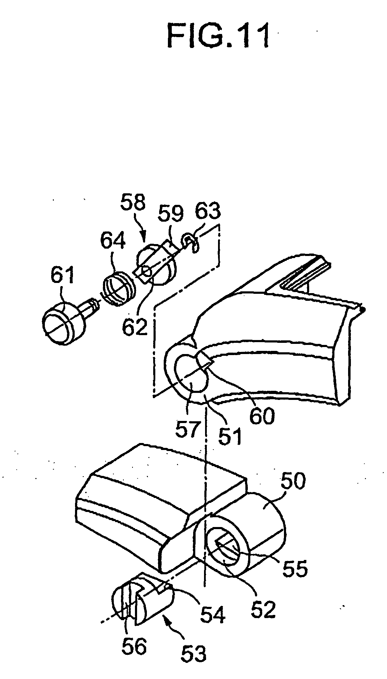

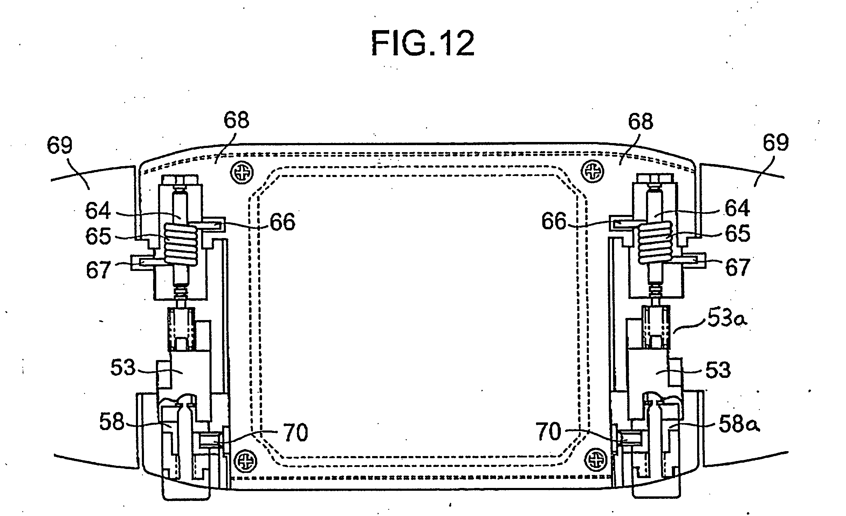

Fig. 11 is a disassembled view showing a hinge piece in a mounting member of a wrist mounting type electronic apparatus according to Embodiment 3. The hinge is constituted by two pieces of hinge pieces 50 and 51 having recessed and projected portions. The projected portion side hinge piece (hinge piece having a projected portion) 50 is provided with an inner hole 52 and a latch 53 is provided at the inner hole 52. A two face width portion 54 is provided at one end portion of the latch 53 constituting a cylindrical shaft and is fitted to a straight line groove 55 at inside of the inner hole 52. Thereby, the latch 53 is bound in pivoting at inside of the inner hole 52 and is pivoted along with the projected portion, that is, the projected portion side hinge piece 50. Further, the latch 53 is urged by a spring 53a (Fig. 12) from an inner side of the hole 52 in a direction of jumping out to an opening side and a straight line groove 56 is inscribed at an end portion of the latch 53 in the direction of jumping out.

In the hinge piece 51 on the recessed side (hinge piece having a recessed portion), an inner hole 57 is perforated in a direction of a pivoting shaft and the inner hole 57 is inserted with a latch catching portion 58. The latch catching portion 58 is integrated with a key 59 and the key 59 is engaged with a key groove 60 of the inner hole 57. Thereby, the latch catching portion 58 is bound in pivoting in the inner hole 57 and is integrated with the hinge piece 51 on the recessed side. Further, the latch catching portion 58 is provided with a two face width portion 58a (refer to Fig. 12) fitted to the straight line groove 56. Further, when the straight line groove 56 of the latch 53 pivoting along with the hinge piece 50 on the projected side and the two face width portion 58a of the latch catching portion coincide with each other, the latch 53 jumps out from a side face of the inner hole 52 in the axial direction and fitted to the latch catching portion 58. The hinge is fixed by the fitting operation.

A push button 61 inserted into the hinge piece 51 on the recessed side, penetrates a hole 62 perforated at the latch catching portion 58 and a lock ring 63 is engaged with an opposed side (penetrated and projected end portion). The push button 61 serves to push back the latch 53 to the inner hole 52 on the projected side. Further, when a coil spring 64 is interposed between the push button 61 and the latch catching portion 58, the push button 61 is always urged to thereby facilitate to push. The latch 53 and the latch catching portion 58 are fitted as described above and accordingly, when an angle of inscribing the two face width portion 58a of the latch catching portion 58 is changed, there is changed an angle of fixing the latch 53 and accordingly, the hinge piece 50 on the projected side.

Meanwhile, in considering a one side strap of a wrist mounting type electronic apparatus, the strap can serve its role in pivotal movement at an angle at least equal to or smaller than 120 degree. In a pivotal movement range of the strap or the hinge, the straight line groove 56 inscribed at the end portion of the latch 53 is formed in a shape constituting the same direction at only a single angle with the recessed side of the hinge as a reference. (The same direction is constituted only after rotating the straight line groove 56 by 180 degrees.) Hence, there are prepared a plurality of the latch catching portions 58 provided with the two face width portions 58a in directions in which the angles respectively differ relative to the direction of projecting the key 59 and any one thereof is selected and provided at the inner hole 57 of the recessed portion side hinge piece 51. Thereby, the angle of the hinge, that is, the angle of the hinge piece 50 in fitting with the latch catching portion 58 can be changed. Thereby, the angle of mounting the strap coupled to the hinge can be changed and adjusted.

Further, in this case, the hinge piece 51 on the side of a main body of the wrist mounting type electronic apparatus is provided on the recessed side and the hinge piece 52 on a side of the strap is provided at the projected side. However, this may be reversed and in that case, the position of the push button is only disposed on the side of the strap and there is not a difference in principle. Further, the push button 61 may be provided to either of the left side and the right side of side faces of the main body or the strap.

Fig. 12 is a plane sectional view showing an inner portion of the hinge. As illustrated in the drawing, the projected and the recessed sides of the hinge can be pivoted by a pivoting shaft pin 64 and the latch 53 slightly jumped out from the projected side. The pivoting shaft pin 64 penetrates a coil spring 65 and projected portions 66 and 67 at both ends of the coil spring 65 are respectively brought into contact with a main body 68 and a strap 69. Thereby, the main body 68 and the strap 69 are urged so as to always open. The key 59 of the latch catching portion 58 is locked by a screw 70, as a fixed member, from a skewedly lower side of the main body and by loosening the screw 70, the latch catching portion 59, the push button 61 and the like can simply be disengaged.' The screw 70 is utilized when the latch catching portion 58 is replaced by a latch catching portion having a different angle of the straight line groove.

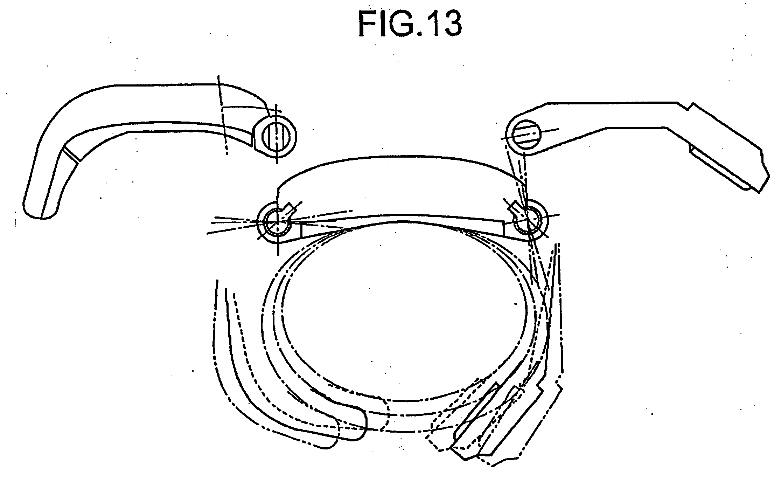

Fig. 13 is a transverse outlook view showing a degree of opening the strap. As described above, by interchanging the latch catching portion 58, the degree of opening the strap can be changed. As shown in the drawing, for example, when the strap on one side is changed at three angles, by combining the left and the right sides of the straps, the angle of the strap can be adjusted in nine stages. Thereby, various sizes of the wrist can be dealt with.

In this way, according to the mounting member of the wrist mounting type electronic apparatus of Embodiment 3, by preparing a plurality of the latch catching portions 58 inscribed with two face widths or straight line grooves having different angles relative to the key 59 at the end portions, selecting any one thereof and by inserting the selected one into the recessed portion, the angle of fixing the hinge 69 can be changed and accordingly, the position of fixing the strap can be changed and adjusted. Thereby, the strap 69 can be maintained at the most suitable position in conformity with the size of the wrist.

### (Embodiment 4)

Next, an explanation will be given of a wrist mounting type electronic apparatus 100 according to Embodiment 4 of the invention in reference to Fig. 14 through Figs. 16.

According to the wrist mounting type electronic apparatus 100, an electronic apparatus main body 101 is connected to a rigid strap 104 via a hinge 103 on a side of one end 102 thereof. Further, although not illustrated in the drawing, that the electronic apparatus main body 101 is connected to another rigid strap via a similar hinge also at other end side is similar to the cases of Embodiment 2 and Embodiment 3. Here, with regard to the strap 104, "rigid" refers to the state that rigidity of a main body or the like of the strap 104 is high to a degree at which the strap 104 per se cannot substantially be bent to fit around the wrist and accordingly, in order to fit a wrist mounting member comprising the electronic apparatus main body 101 and the strap 104 around the wrist, the strap 104 needs to pivot by the hinge 103 relative to the main body 101.

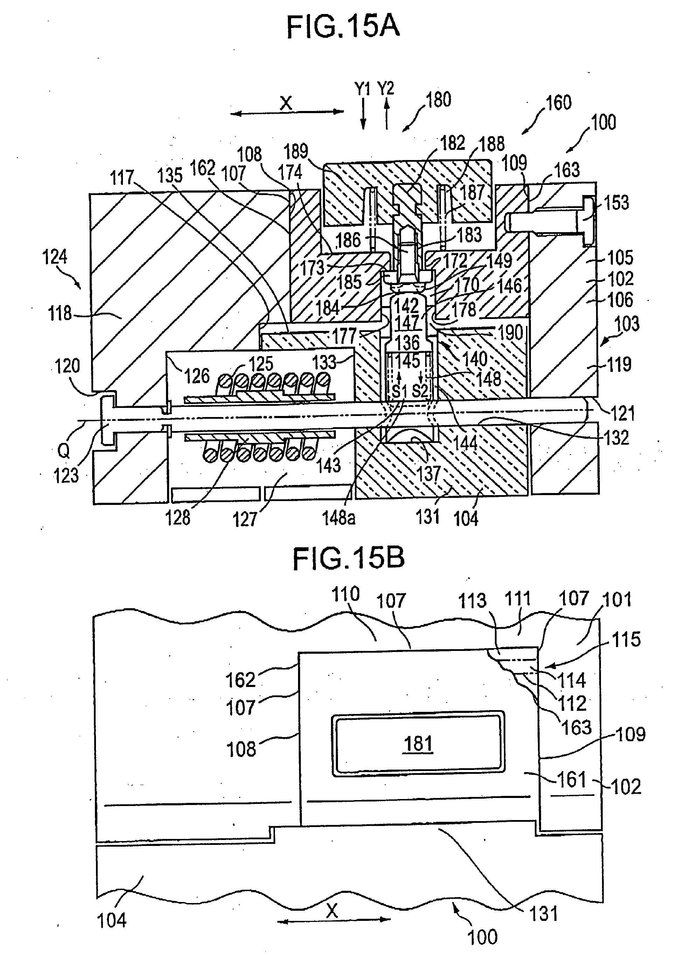

More in details, the electronic apparatus 101 is provided with a recessed portion or a notched portion 107 substantially in a shape of a rectangular parallelepiped at a middle portion of an end portion 106 of a barrel portion 105 of the main body 101 in a width direction X (Figs. 15A and 15B). Side faces 108 and 109 at both ends of the notched portion 107 in the width direction are extended in a planar shape substantially over a total of the barrel portion 105 in a thickness direction. Meanwhile, a side wall 110 on a depth side of the notched portion 107 is constituted by upper side and lower side side wall portions 111 and 112 disposed at different depths and an engaging portion 115 having a recessed portion 113 and a projected portion 114 is formed between a lower end of the upper side side wall portion 111 and an upper end of the lower side side wall portion 112. Numeral 116 designates a case back fixed to the barrel portion 105.

To the notched portion 107 of the barrel portion 105 of the main body 101 a positioning unit 160 as a pivotal position prescribing member, mentioned later in details is detachably fixed.

As is the most apparent from Fig. 15A, the barrel portion 105 of the main body 101 is further formed with a recessed portion or a notched portion 117 having a partially cylindrical shape constituting a central. axis line by an axis line Q and communicating with the notched portion 107. Further, at wall portions 118 and 119 on both sides of the notched portion 117 in the width direction X, there are formed hole portions 120 and 121 along the axial line Q. The holes portions 120 and 121 are fittedly inserted with a pivoting shaft o'r a hinge pin 123. The side wall portions 118 and 119 on the both sides of the notched portion 117 in the width direction and the hole portions 120 and 121 constitute a first hinge piece 124 as a whole and the first hinge piece 124 is integral with the barrel portion 105 of the electronic apparatus main body 101.

The strap 104 is provided with a head portion 131 having a partially cylindrical shape centering on the axial line Q and the head portion 131 is provided with a through hole 132 along the central axis line Q. The through hole 132 is penetrated with the hinge pine 123 and the head portion 131 of the strap 104 is arranged in the notched portion 117 having the partially cylindrical shape of the barrel portion 105 with a clearance therebetween to be pivotable around the central axis line Q in directions of R1 and R2. Here, a second hinge piece 134 is constituted by the head portion 131 of the strap 104 and the hole 132.

A torsional spring 125 one end of which is directly or indirectly supported by the head portion 131 of the strap 104 and other end of which is directly or indirectly supported by the barrel portion 105 of the electronic apparatus main body 101, is arranged at inside of a chamber 127 formed by a recessed portion 126 of the barrel portion 105 and a recessed portion 133 of the head portion 131 in a state of being twisted to deviate the strap 104 in the opening direction R1. Numeral 128 designates a support member for maintaining a shape of the spring 125 and is fitted to the shaft 123.

At the head portion 131 of the strap 104, there is formed an adjust pin mounting hole 136 extended in a direction orthogonal to the central axis line Q and opened at a top portion 135 of the head portion 131. A bottom 137 of the hole 136 is disposed further on a depth side of the central axis line Q. The hole 136 is fitted to the adjust pin structural member 140. The adjust pin structural member 140 is provided with a locking rib 142 directed inwardly in the radius direction at one end 141 thereof and is provided with a frame member 144 substantially in a cylindrical shape constituting a projected supporting portion having a through hole 143 in the diameter direction at other end side thereof. The frame body 144 is substantially fixed to inside of the hole 136 by the hinge pine 123 penetrating the through hole 143 in a state of being fittedly inserted into the hole 136. The adjust pin structural member 140 is further provided with a pin main body 147 constituting a projected portion which is fitted to the cylindrical frame member 144 at a large diameter portion 145 of its base portion and in which a cylindrical or a cylindrical column-like portion 146 having a small diameter on a front end side thereof is projected to penetrate an opening of the rib 142 of the frame member 144, and a compression spring 148 integrated between the large diameter base portion 145 of the pin main body 147 and a spring receive 148a arranged at the shaft 123 inside of the frame member 144 to deviate the pin main body 147 in an outer direction S1. Further, the pin main body 147 is provided with a top portion 149 formed by a smooth projected shape, typically, in a partially spherical or dome-like shape.

Therefore, the pin main body 147 of the adjust pin structural member 140 is projected in a direction of compressing the spring 148, that is, in the outer direction S1 in a state of being retractable elastically in an inner direction S2. When the strap 104 is moved from a mounting position P2 to an opening portion P1 in a state of retracting the pin main body 147 by pressing the pin main body 147 of the adjust pin structural member 140 to dispose substantially at inside of the frame member 144, in Fig. 14, as shown by an imaginary line 147, the top portion 149 of the pin main body 147 is brought into contact with a peripheral face 117 a of the partially cylindrical notched portion 117 of the main body 105. In Fig. 14 showing a state of viewing from a side face, the peripheral face 117a is disposed at a position precisely overlapping a partially cylindrical inner peripheral face 116a of the case back 116. 'Therefore, the strap 104 is pivotable in the directions of R1 and R2 around the central axis line Q relative to the barrel portion 105 of the electronic apparatus main body 101 in a state of extracting the pin main body 147, in other words, the adjust pin structural member 140.

The positioning unit 160 constituting the pivotal position prescribing member, is provided with a unit main body portion 161 having a shape of an outer side face thereof in a shape complimentary with the notched portion or the recessed portion 107 of the barrel portion 105 of the electronic apparatus main body 101 and detachably mounted to the recessed portion 107 of the electronic apparatus main body 101. The positioning unit 160 is detachably fixed with a lock bolt 153 from a side face of the barrel portion 105 in.a state of being mounted to a predetermined position. Further, the positioning unit 160 may be locked or fixed detachably to the main body 101 with a locking releasable locking member such as an elastic hook member in place of the lock bolt 153.

More in details, the unit main body portion 161 is provided with side faces 162 and 163 opposed to the side faces 108 and 109 of the notched portion 107 and is provided with, on a side facing the central portion of the apparatus main body 101 Aside walls 164 and 165 in the back side having shapes complimentary with the engaging portion 115 comprising the side walls 111 and 112 at the depth portion of the notched portion 117, and the recessed portion 113 and the projected portion 114, as well as an engaged portion 166 comprising a projected portion 166a and a recessed portion 166b. The unit main body portion 161 is further provided with, on a side of the bottom portion remote from the apparatus main body 101, a partially cylindrical bottom face portion 168 opposed to the partially cylindrical spherical face of the head portion 131 of the strap 104 and is provided with, at an upper portion thereof, an inclined upper face 169 continuously communicating with an upper face of the barrel portion 105 of the apparatus main body 101.

The unit main body portion 161 is further provided with an adjust pin receiving recessed portion 170 opened at the partially cylindrical bottom face portion 168, a push button receiving recessed portion 171 opened at the inclined upper face 169 and a push pin insertion hole 172 for communicating continuously the two recessed portions 170 and 171 at bottom portions thereof.

A push button mechanism 180 is provided with a push button main body 181 precisely fitted to the push button receiving recessed portion 171, a connecting shaft portion 182 fittedly attached to the push button main body 181 at its upper end and extended downwardly from the fittedly attached portion, a push pin 186 screwedly attached to a screw hole 183 extended upwardly from a lower end of the shaft portion 182 by a male screw portion and fixedwith a head portion 184 via a spacer 185 and a compression spring 187 for deviating the push button main body 181 in a projecting direction Y1, that is, in an upward direction Y1. The shaft portion 182 penetrates the push pin insertion hole 172 and extended in a lower direction Y2 and the spacer 185 deviated in the Y1 direction by the compression spring 187 is brought into contact with a bottom face (upper face) 173 of the adjust pin receiving hole 170 at its upper face. Further, one end side of the compression spring 187 is fitted to a spring receiving recessed portion 188 of the push button main body 181 and other end thereof is brought into contact with a bottom face 174 of the push button receiving recessed portion 171. Although a planar shape of the spacer 185 is illustrated as noncircular, the planar shape may be circular. According to the push button mechanism 180, the rigid push button 189 comprising the push button main body 181, the connecting shaft portion 182, the spacer 185 and the push pin 186, is normally locked in a state of being deviated in the Y1 direction by the spring 187 to thereby bring the spacer 185 into contact with the bottom face 173 of the hole 170 and when the push bottom main body 181 is pushed down in the Y2 direction, the pin 186 integral with the main body 181 is pushed down in the Y2 direction.

The adjust pin receiving recessed portion 170 is prescribed by four side faces 175, 176, 177 and 178 and the side face 175 in the pivoting direction R1, is provided with a pivotal position prescribing face or a degree stop face 179 for prescribing or restricting a relative pivotal position of the adjust pin main body 147 on a side of an opening 190 of the recessed portion 170. The side faces of the adjust pin receiving recessed portion 170 opposed to each other in the X direction (width direction of main body 101), are disposed at an interval therebetween sufficient for containing the adjust pin main body 147 and the spacer 185 of the push pin 186 and the interval between the side faces 175 and 176 opposed to each other in the pivoting directions R1 and R2, is sufficiently larger than the thickness of the adjust pin main body 147. However, the shapes of the side faces 175, 176, 177 and 178 may be different from the illustrated so far as a side edge portion 147a of the adjust pin main body 147 is brought into contact with the pivotal position prescribing face 179 to thereby enable to restrict pivotal movement in the R1 direction of the pin main body 147 and the top portion 149 of the adjust pin main body 147 is pressed by the head portion 184 of the push pin 186 to thereby enable to push down the adjust pin main body 147 in the S2 direction, the recessed portion 170 may be, for example, a hole in an elliptical shape (a constitution four side faces of which are smoothly bent and connected) in place of the hole having substantially the square shape and a portion of the side faces may be formed by a planar shape.

Although according to the illustrated example, at the mounting position P2, the adjust pin main body 147 is brought into contact with the position regulating face 179, at an edge portion 149a of the top portion 149, that is, the top portion 149a of the side edge portion 147a, the position regulating face 179 may be formed in a shape and at a position to be brought into contact with the position regulating face 179 at a portion of the side edge portion 147a other than the top portion 149a. Further, when the regulating face 179 is formed at a pertinent position, the adjust pin main body 147 may be flush with the face 175 in place of a face inclined and intersected with the side face 175 as shown in Fig. 14. However, as shown by Fig. 14, by constituting the position regulating face 179 by a face inclined to the side face 175 in the R1 direction; the pivoting shaft, that is, the hinge pin 123 can be arranged relative to the push button 181 on the outer side of a longitudinal direction Z of the main body 101.

According to the hinge 103 constituted as described above, at the mounting position P2 shown in Fig. 14, a position of mounting the rigid strap 104 relative to the electronic apparatus main body 101 in the pivotal directions R1 and R2, is prescribed by an angle α made by an imaginary line W in the direction of extending adjust pin main body 147 relative to an imaginary line 1 in the direction Z of extending the apparatus main body 101 (horizontal direction viewed in Fig. 14). That is, the strap 104 deviated in the R1 direction relative to the apparatus main body 101 by the torsional spring 125, is positioned by bringing the top edge portion 149a of the adjust pin main body 147 into contact with the side wall 179 of the adjust pin receiving recessed portion 170. Further, in such a state, the adjust pin 147 is maximally projected in the S1 direction, further, there is a clearance between the top portion 149 of the adjust pin 147 and the head portion 184 of the push pin 186 of the push button mechanism 180.

When the rigid strap 104 is moved from the mounting position P2 to the opening position P1 shown in Fig. 14 by an imaginary line, in the case of detaching the positioning unit 160, the push button 181 of the push button mechanism 180 for releasing lock, is depressed and the head portion 184 of the push pin 186 is moved in the Y2 direction to thereby push down the adjust pin main body 147 in the X2 direction. Typically, in accordance with progress of pushing down, the top edge portion 149a of the adjust pin main body 147 is moved in the Y2 direction along the side face 179 and the rigid strap 104 is pivoted little by little in the R1 direction by the torsional spring 125. When the top edge portion 149a of the adjust pin main body 147 reaches the bottom face 168, the rigid strap 104 is pivoted in the R1 direction such that the top portion 149 of the adjust pin main body 147 is moved in the R1 direction along the bottom face 168 under operation of the torsional spring 125 and is further moved in the R1 direction along the notched portion 117 of the main body 101 having the shape the same as that of the notched portion 116a of the case back 116. The pivotal movement of the rigid strap 104 in the R1 direction is stopped by bringing a portion 131a of a head portion 131 extended substantially in a tangential direction to deviate from the cylindrical'shape of the head portion 131 of the strap 104, into contact with a projected lower edge portion 161a of the unit main body 161. Further, when the strap 104 is disposed at the opening position P1, an end portion of the portion 131a of the strap 104 in the width direction X is brought into contact with and held by a similar projected edge portion (not illustrated) of the barrel portion 105.

When the positioning unit 160 is removed in a state in which the rigid strap 104 is disposed at the opening position P1, the top screw 153 is detached, thereafter, for example, a recessed portion 161b at a side face on a side of an end portion of the unit main body 161 is touched by the finger tip and the unit main body 161 is pushed up in the Y1 direction. Thereby, engagement between the engaging portion 115 and the engaged portion 166 is released and the rigid main body 161 is detached from the notched portion 107 of the barrel portion 105. Further, as described above, the rigid strap 104 is brought into contact with and supported by a similar projected edge portion (not illustrated) of the barrel portion 105 at an end portion of the portion 131a in the width direction X and therefore, the strap 104 is held at the position as it is.

When the positioning unit 160 is attached, in a state in which the rigid strap 104 is disposed at the opening position P1, the unit main body 161 is fitted to the notched portion 107 such that the engaged portion 166 of the unit main body 161 is engaged with the engaging portion 115 of the notched portion 107 of the barrel portion 105. In the illustrated example, the engaged portion 166 is engaged with the engaging portion 115 and further, the lower end face 161c of the unit main body 161 is brought into contact with the notched portion 166a of the case back 166 to thereby finish mounting the unit main body 161. A mechanism or a structure of attaching and detaching the unit main body 161 to and from the apparatus main body 101 may be replaced by other arbitrary constitution.

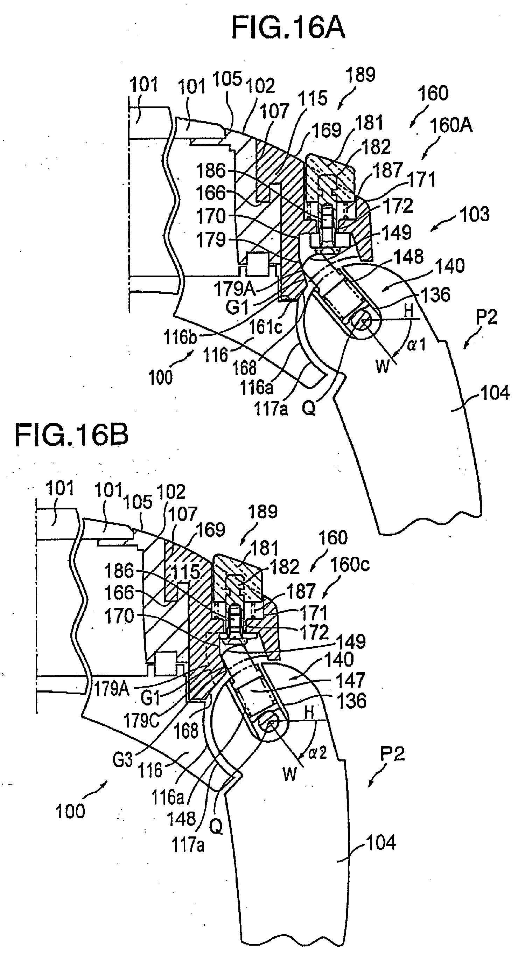

As the positioning unit 160, there are prepared three kinds of a group of positioning units 160A, 160B and 160C in which the positioning side walls 179 are disposed at three different positions such as G1, G2 and G3. The positioning unit 160B in which the positioning side wall 179 is disposed at position G2 indicated by a bold line in Fig. 14, is the positioning unit 160 of Fig. 14, the positioning unit 160A disposed at a position indicated by an imaginary line G1 in Fig. 14, is shown by Fig. 16A and the positioning unit 160c disposed at a position indicated by an imaginary line G3 in Fig. 14 is shown by Fig. 16B. Further, in Fig. 16A, Fig. 14 and Fig. 16B, the positioning side walls 179 disposed at positions G1, G2 and G3 are respectively designated by notations 179A, 179B and 179C. Except that typically, the positions of the positioning side walls 179 differ (more in details, in accordance with the difference, the positions of the side walls 175 continuous to the side walls 179 differ further and lengths of the bottom faces 173 intersecting with the side walls 175 differ and lengths of the bottom face portions 168 opened by the side walls 179 in the pivotal directions R1 and R2 differ), the three kinds of positioning units 160A, 160B and 160C are the same in other point. Further, although in Fig. 14 and Figs. 16A and 16B, the shapes of the spacers 185 and the shapes of the head portions 184 of the push pins 186 are illustrated to differ, the shapes may be the same. However, in order to constitute a shape or a size suitable for moving the adjust pin main body 147 in accordance with depression of the push button 181, when desired, the shapes of the spacer 185, the head portion 184 of the push pin 186 and the like may pertinently be changed. Although in the illustrated examples, the three kinds of positioning units 160A, 160B and 160C are shown, the kind of the positioning unit 160 may be four kinds or more or may be two kinds so far as the positioning units can be adapted to the size of the wrist of the user.

For example, when the positioning unit 160B of Fig. 14 is the positioning unit 160 adapted to the wrist having a standard size, in order to adapt to a person having a thicker wrist size, for example, after removing the positioning unit 160B of Fig. 14 by the above-described procedure, the positioning unit 160A shown in Fig. 16A may be fitted to the recessed portion 107. In a state of fitting the positioning unit 160A, the engaged portion 166 of the unit 160A is fitted to the engaging portion 165 of the recessed portion 107 and the bottom face 161c of the unit 160A is brought into contact with the notched face 116b of the case back 116 similar to the above-described case.

After fitting the positioning unit 160B to the recessed portion 107, the rigid strap 104 is pivoted from the opening position P1 indicated by the imaginary line in Fig. 14 in the R2 direction. In accordance with pivotal movement of the strap 104 in the R2 direction, the adjust pin main body 147 is moved from the position at which the top portion 149 is brought into contact with the notched face 117a of the apparatus main body 101 coinciding with the partially cylindrical notched face 116a of the case back 116 in the R2 direction by passing the position in contact with the partially cylindrical bottom face 168 of the unit 160B and thereafter fitted to the adjust pin receiving recessed portion 170. After the pin main body 147 is loosely fitted to the recessed portion 170, when pivotal force in the R2 direction exerted to the rigid strap 104 is released, the strap 104 is returned in the R1 direction by the torsional spring 125 and is locked at a position at which the top edge portion 149a of the adjust pin main body 147 is brought into contact with the positioning side wall 179A disposed at position G1. An angle α1 in the case of being positioned in this way, is smaller than the angle a of Fig. 14 to thereby adopt a shape adapted the thicker wrist.

Meanwhile, when the size of the wrist is slenderer than the standard size, in place of the positioning unit 160B, the positioning unit 160C may be mounted similarly. As a result, as shown by Fig. 16B, there is provided the wrist mounting type electronic apparatus in which an angle α2 is larger than the angle α of Fig. 14 and the wrist mounting type electronic apparatus having the mounting member of a shape adapted to a slenderer wrist is provided.

As described above, according to the electronic apparatus 100 of Embodiment 4, what is to be operated directly by a user or an apparatus provider or the like for adjusting the size in conformity with the size of the wrist, is practically limited to parts having a comparatively large sizes and much exposed to the surfaces such as the positioning unit 160 (more in details, the unit main body 161 detachable by the push button 181 and the recessed portion 161b of the unit 160 and attachable by the engaged portion 166) and the rigid strap 104, it is not necessary for the user to directly take the adjust pin main body 147 or the like by the finger tip for attachment and detachment to and from the recessed portion 170 of the adjust pin structural member 140 related to the positioning and therefore, replacement of desired part (replacement of positioning unit) for adjusting the size can be carried out easily and firmly. Further, fixing by the lock pin 153 may be avoided as described above. Further, the positioning unit 160 can detachably be fitted to the recessed portion 107 having the complementary shape of the apparatus main body 101 and therefore, in accordance with the replacement, change of the angle of attaching the rigid strap (change in conformity with size of wrist) is facilitated.

As has been explained above, according to the mounting member of the wrist mounting type electronic apparatus of the invention, the slide .piece can be maintained at the most pertinent position in conformity with the size of the wrist and the position can easily be changed. Further, in the state in which the mounting member of the wrist mounting type electronic apparatus is mounted onto one wrist, when the mounting member is grasped by the other hand, the slide piece is pressed and the latch fitted to the groove of the slide piece is caught by the recess at the most suitable position. Thereby, the mounting member can easily deal with the size of the wrist.

Further, according to the mounting member of the wrist mounting type electronic apparatus of the invention, the front end of the latch is constituted by the spherical body and therefore, when the obtuse head is brought into contact with the slide groove or the recess, the obtuse head is subjected to rolling friction. Thereby, there is achieved an effect of reducing friction more than the constitution in which the sliding friction is carried out simply by the obtuse head.

Further, according to the mounting member of the wrist mounting type electronic apparatus of the invention, by selecting the one of the holes A constituting a plurality of holes (hole 26 in the illustrated example) to which the latch pin is provided, the position of fixing the strap can be changed. Thereby, the strap can be maintained at the most suitable position in conformity with the size of the wrist.

Further, according to the mounting member of the wrist mounting type electronic apparatus of the invention, by preparing a plurality of the latch catching portions inscribed with two-face widths or straight line grooves having different angles relative to the keys at end portions thereof, by selecting any one thereof and inserting the latch catching portion into the recessed portion, the angle of fixing the hinge can be changed and therefore, the position of fixing the strap can be changed and adjusted. Thereby, the strap can be maintained at the most suitable position in conformity with the size of the wrist.

Further, in the mounting member of the wrist mounting type electronic apparatus according to the invention, by preparing a plurality of kinds of the pivotal position prescribing members having different relative pivotal prescribing positions between the first and the second hinge pieces and mounting the pivotal position prescribing members detachably to the recessed portion of the apparatus main body having the complimentary shape, the pivotal restricting position can be changed without operating small parts.

## Claims

1. A wrist mounting type electronic apparatus comprising:
a slender slide piece; and
a mounting member for guiding the slide piece such that the slide piece can be moved in a longitudinal direction;
wherein either one of the slide piece and the mounting member includes a groove for locking the slide piece relative to the mounting member; and
wherein the other of the slide piece and the mounting member includes a locking portion engaged with the groove for determining a position of the slide piece.

2. The wrist mounting type electronic apparatus according to Claim 1, wherein a plurality of the grooves are included in either one of the slide piece and the mounting member; and
wherein the locking portion is formed at the other thereof different from the either one.

3. The wrist mounting type electronic apparatus according to Claim 1, wherein the locking portion is formed in the slide piece; and
wherein the slide piece includes an elastically deformed elastic portion and the elastic portion includes the locking portion.

4. The wrist mounting type electronic apparatus according to Claim 1, wherein the locking portion includes an engaging member for engaging with the groove and an elastic member for pressing the engaging member in a depth direction of the groove.

5. A wrist mounting type electronic apparatus comprising:
a hinge comprising a first hinge piece and a second hinge piece for opening and closing a mounting member,
wherein the first hinge piece includes a first hole;
wherein the second hinge piece includes a second hole, further comprising:
a latch pin one side of which is inserted into the first hole and the other side of which is inserted into the second hole.

6. The wrist mounting type electronic apparatus according to Claim 5, wherein the first hole is engaged with the latch pin and an inner diameter of the second hole is larger than an outer diameter of the latch pin.

7. The wrist mounting type electronic apparatus according to Claim 5, wherein the second hole comprises a plurality of holes the inner diameters of which differ one another.

8. The wrist mounting type electronic apparatus according to Claim 5, wherein the second hole is provided with a plurality of different inner diameters.

9. A wrist mounting type electronic apparatus comprising:
a latch catching portion for determining an angle of opening and closing a hinge; and
a fixed member for interchangeably fixing the latch catching portion.

10. The wrist mounting type electronic apparatus according to Claim 9, further comprising a latch engaged with the latch catching portion and rotated in accordance with rotation of the hinge.

11. A wrist mounting type electronic apparatus comprising a first and a second hinge pieces relatively pivotable around a pivotal center axis line, further comprising:
a projected portion pivotable around the pivotal center axis line substantially integrally with the first hinge piece and projected in a direction intersecting with a direction of extending the pivotal center axis line from the first hinge piece to the second hinge piece; and
a pivotal position prescribing member having a recessed portion for receiving a projected end portion of the projected portion to restrict pivotal movement of the first hinge piece in one direction relative to the second hinge piece around the pivotal center axis line for restricting pivotal movement of the projected portion in the one direction by a side wall of the recessed portion and detachably mounted to the second hinge piece;
wherein the pivotal position prescribing member is constituted by selectively mounting one of a plurality of kinds thereof having different positions of the side walls so that a position of restricting relative pivotal movement of the first hinge piece relative to the second hinge piece can be changed.

12. The wrist mounting type electronic apparatus according to Claim 11, wherein the recessed portion for receiving the front end of the projected portion of the pivotal position prescribing member is opened at a position opposed to the pivotal center axis line and is extended in a direction substantially orthogonal to a direction of extending the pivotal axis line from the opening.

13. The wrist mounting type electronic apparatus according to Claim 11, wherein the first hinge piece includes a projected support portion engaged with the projected portion so that a front end portion of the projected portion can be projected and retracted and a spring for deviating the projected portion in a direction in which the portion projects and the pivotal position prescribing member includes a pushing pin capable of pushing out the projected portion from the recessed portion for receiving the front end of the projected portion.

14. The wrist mounting type electronic apparatus according to Claim 13, wherein the second hinge piece includes a guide face for guiding pivotal movement of the front end of the projected portion to permit pivotal movement of the first hinge piece relative to the second hinge piece when the front end portion of the projected portion is retracted to be detached from the recessed portion for receiving the front end of the projected portion of the pivotal position prescribing member.

15. The wrist mounting type electronic apparatus according to Claim 11, wherein the second hinge piece and the pivotal position prescribing member are constituted to move relative to the second hinge piece in a direction substantially orthogonal to the direction in which the pivotal center axis line extends when the pivotal position prescribing member is attached to and detached from the second hinge piece.

16. The wrist mounting type electronic apparatus according to Claim 11, wherein opening angles of the first and the second hinge pieces can be increased until the front end portion of the projected portion of the pivotal position prescribing member is brought into contact with the side wall.

17. A wrist mounting type electronic apparatus comprising a first and a second hinge pieces relatively pivotable around a pivotal center axis line, further comprising elastically deviating means arranged between the first and the second hinge pieces to pivot the second hinge piece in one direction around the pivotal center axis line relative to the first hinge piece and relative pivotal position prescribing means for adjustably prescribing a position of relative pivotal movement of the second hinge piece in the one direction relative to the first hinge piece.
